(19) Europäisches Patentamt
European Patent Office
Office européen des brevets

(11) **EP 0 597 054 B1**

(12) **EUROPÄISCHE PATENTSCHRIFT**

(45) Veröffentlichungstag und Bekanntmachung des Hinweises auf die Patenterteilung:
**18.09.1996 Patentblatt 1996/38**

(21) Anmeldenummer: **93909741.6**

(22) Anmeldetag: **21.05.1993**

(51) Int Cl.6: **G01B 11/00**

(86) Internationale Anmeldenummer:
**PCT/CH93/00132**

(87) Internationale Veröffentlichungsnummer:
**WO 93/24806 (09.12.1993 Gazette 1993/29)**

(54) **SENSORVORRICHTUNG UND POSITIONSERMITTLUNGSVERFAHREN SOWIE DEREN VERWENDUNG ZUR STEUERUNG EINES BESTÜCKUNGSROBOTERS**

SENSOR DEVICE AND POSITION DETERMINATION PROCESS AND THEIR USE FOR THE CONTROL OF AN INSERTION ROBOT

DISPOSITIF DE DETECTION ET PROCEDE DE DETERMINATION DE LA POSITION, AINSI QUE LEUR APPLICATION POUR LA COMMANDE D'UN ROBOT DE POSE DE COMPOSANTS

(84) Benannte Vertragsstaaten:
**AT BE CH DE DK ES FR GB GR IE IT LI LU MC NL PT SE**

(30) Priorität: **03.06.1992 CH 1787/92**

(43) Veröffentlichungstag der Anmeldung:
**18.05.1994 Patentblatt 1994/20**

(73) Patentinhaber: **ESEC SA**
**CH-6330 Cham (CH)**

(72) Erfinder:
• **MEISSER, Claudio**
**CH-6330 Cham (CH)**
• **SINGEISEN, Felix**
**CH-6010 Kriens (CH)**

(74) Vertreter:
**EGLI-EUROPEAN PATENT ATTORNEYS**
**Horneggstrasse 4**
**Postfach 473**
**8034 Zürich (CH)**

(56) Entgegenhaltungen:
**DE-A- 3 241 510**

## Beschreibung

Die Erfindung betrifft eine Sensorvorrichtung zur Feststellung der relativen Lage von zwei zueinander verschiebbaren Objekten, gemäss dem Oberbegriff des Anspruchs 1, ein Verfahren zur selbsttätigen Ermittlung einer Position eines verschiebbaren Roboters in bezug auf ein Objekt mit Hilfe der genannten Sensorvorrichtung, und eine Verwendung der Sensorvorrichtung sowie eine Anwendung des Verfahrens zur Steuerung eines Bestückungsroboters für eine Linie von Maschinen und/oder Einrichtungen insbesondere zur automatischen Bearbeitung bzw. Behandlung von elektronischen Bauelementen.

Fig. 1 zeigt schematisch in Perspektive eine Linie von Maschinen zur automatischen Bearbeitung und/oder von Einrichtungen zur automatischen Behandlung von elektronischen Bauelementen gemäss dem Stand der Technik.

Fig. 2 zeigt in schematischer Seitenansicht ausgewählte Elemente der in Fig. 1 gezeigten Anlage gemäss dem Stand der Technik.

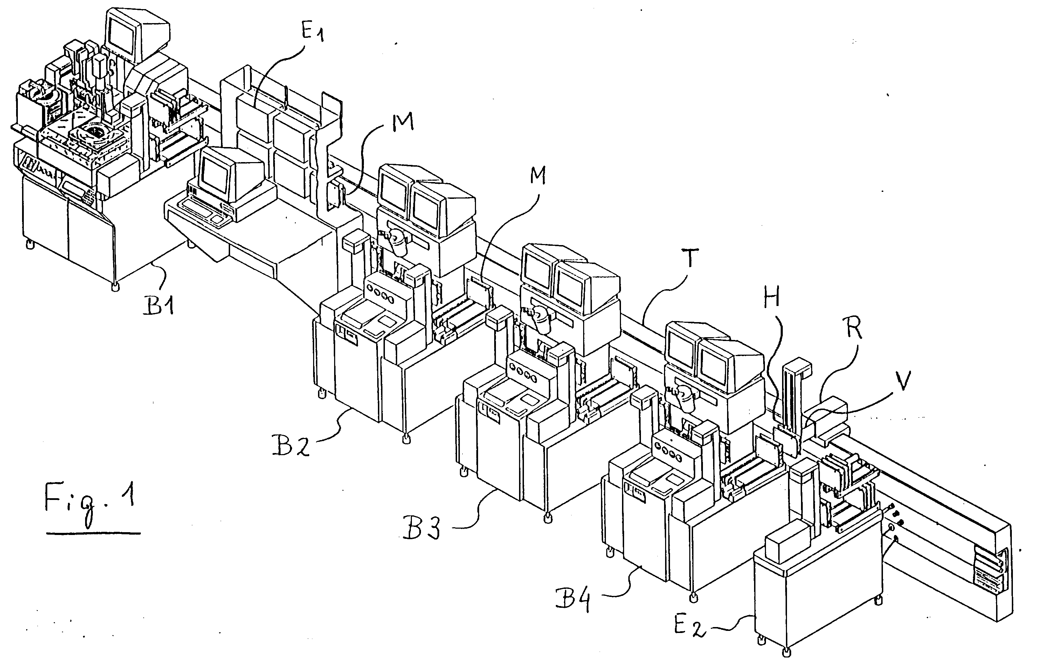

Aus der Zeitschrift "productronic 1/2-1991", Seite 112 sowie aus "European Semiconductor", Oktober 1990, ist die in Fig. 1 schematisch in Perspektive dargestellte Linie von Maschinen zur automatischen Bearbeitung und von Einrichtungen zur automatischen Behandlung von elektronischen Bauelementen bekannt. Die Maschinen B1-B4 sind beispielsweise "Die-Bonder" und "Wire-Bonder" zum Erstellen von elektrischen Verbindungen auf den Bauelementen, und die Einrichtungen E1-E2 sind beispielsweise Durchlauföfen zum Aushärten von Kunststoffen und Einrichtungen zur Zwischenlagerung der Bauelemente. Die zu bearbeitenden bzw. zu behandelnden Bauelemente sind in Magazinen M enthalten, wenn sie transportiert, den Maschinen B1-B4 bzw. Einrichtungen E1-E2 zugeführt und darin zur Bearbeitung bzw. Behandlung sowie zum Abtransport nach der Bearbeitung bzw. Behandlung bereitgestellt werden. Die Maschinen B1-B4 und Einrichtungen E1-E2 sind in Reihe aufgestellt. Hinter dieser Reihe ist, im Hinblick auf den Transport der Magazine, eine Schieneneinrichtung T angeordnet, auf der ein Bestückungsroboter R läuft, der die Magazine M wie erforderlich greift, bewegt, positioniert und loslässt.

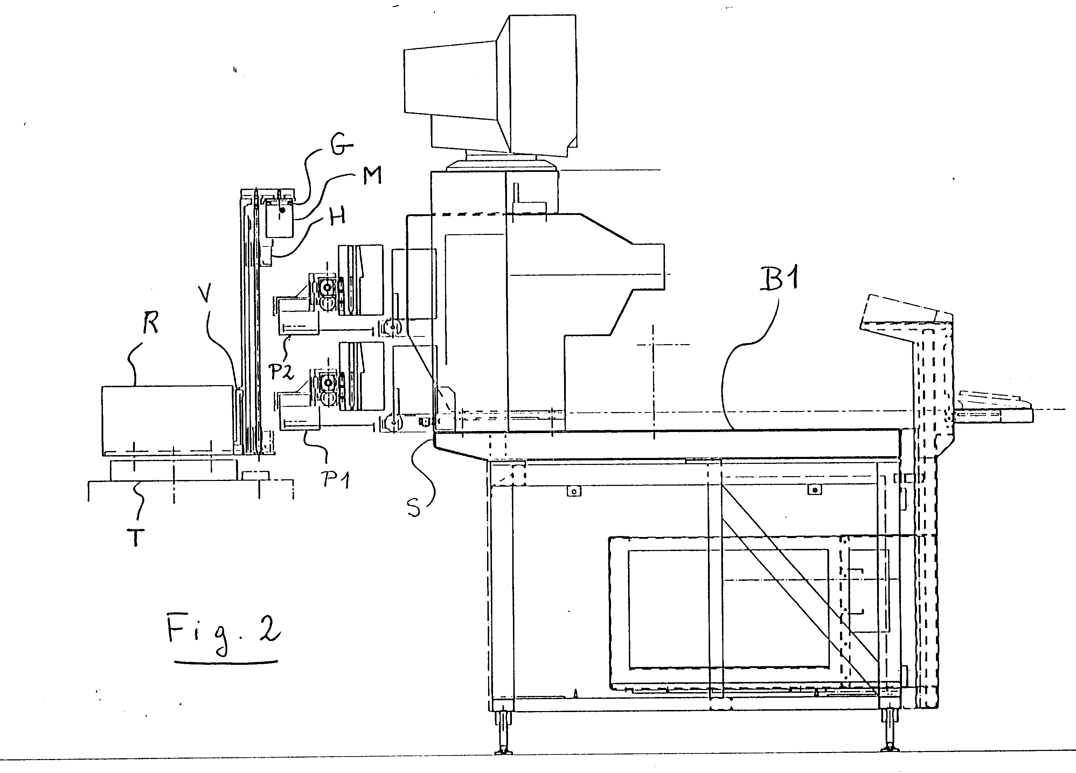

In Fig. 2 sind die Maschine B1, die Schieneneinrichtung T und der Bestückungsroboter R in schematischer Seitenansicht dargestellt. Der Bestückungsroboter R fährt geradlinig und horizontal auf der Schieneneinrichtung T. Ein Greifer G für das Magazin M ist am Bestückungsroboter R über einen Vorrückschlitten V und einen Hebeschlitten H beweglich abgestützt. Der Vorrückschlitten V ist am Bestückungsroboter R horizontal und orthogonal zur Schieneneinrichtung T zur Maschine B1 hin und von ihr weg beweglich. Der Hebeschlitten H ist am Vorrückschlitten V vertikal beweglich. Somit ist der Greifer G mit drei kartesischen Freiheitsgraden bzw. Bewegungsrichtungen gegenüber der Maschine B1 bewegbar, um das Magazin M zur vorgesehenen Magazinposition P1 bzw. P2 an der Maschine B1 zu bringen und dort abzuladen, bzw. um es dort zu greifen und von dort wegzuführen.

Es stellt sich dabei das Problem, die Bewegungen des Bestückungsroboters R zu automatisieren.

Die Maschinen B1-B4 werden nämlich je nach den Bedürfnissen der Fabrikation aufgestellt, gewechselt und verstellt. Die einzelnen Maschinen sind dann zwar so gut wie möglich rechtwinklig zur Schieneneinrichtung T bzw. zur Laufrichtung des Bestückungsroboters R gerichtet, jedoch mechanisch nicht direkt und auf vorbestimmte Weise mit der Schieneneinrichtung T verbunden. Die einzige gemeinsame Referenz ist die Bodenebene, im übrigen können die Maschinen M bzw. deren Magazinpositionen P1-P2 in verschiedenen nicht normierten Höhen über Boden und Abständen zur Schieneneinrichtung T angeordnet sein. Unter diesen Umständen ist es zur Automatisierung der Bewegungen des Bestückungsroboters R nötig, vom Bestückungsroboter R selbst die Magazinpositionen P1-P2 lernen und die entsprechende Soll-Position des Greifers G bestimmen zu lassen, sonst müssten die Magazinpositionen P1-P2 nach jeder Aenderung vermessen und der Steuerung des Bestückungsroboters R als entsprechende Vorgabe eingegeben werden, was äusserst aufwendig wäre. Zur Erkennung der betreffenden Magazinpositionen sind Sensorvorrichtungen nötig.

Eine dazu verwendbare Sensorvorrichtung ist beispielsweise aus einem Prospekt "LN110/120" der Firma Namco bekannt. Sie umfasst im wesentlichen einen Laser als Lichtquelle, einen konstant rotierenden Spiegel, einen Fotodetektor und einen Winkelreferenzdetektor, die alle in einer Messvorrichtung integriert sind, sowie einen Retroreflektor und gegebenenfalls Code-Schilder, die an einem Objekt angebracht sind, und einen Mikroprozessor, dessen Funktion unter anderem diejenige einer Rechenschaltung ist. Unter Verwendung des konstant rotierenden Spiegels tastet der Laserstrahl einen vorbestimmten Blickwinkel periodisch ab. Der Retroreflektor wirft den Laserstrahl zurück auf den Fotodetektor. Solange der mit konstanter Geschwindigkeit abtastende Laserstrahl auf den Retroreflektor trifft, erzeugt der Fotodetektor einen Rückstrahlimpuls, dessen Zeitdauer umgekehrt proportional zum Abstand des Retroreflektors zum Fotodetektor ist. Je näher der Retroreflektor am Fotodetektor ist, um so grösser ist das Tastverhältnis von Rückstrahldauer zu Dunkelzeit in einer Periode der Abtastung. Andererseits erzeugt der Winkelreferenzdetektor bei jeder Periode der Abtastung einen Winkelreferenzimpuls. Wenn der Laserstrahl im Laufe der Abtastung den Retroreflektor erreicht, beginnt ein Rückstrahlimpuls. Die Zeit zwischen dem Beginn des Winkelreferenzimpulses und dem Beginn des Rückstrahlimpulses ist direkt proportional zur Winkelstellung des Retroreflektors in bezug auf die Richtung des Laserstrahls beim Beginn des Winkelreferenzimpulses. Somit sind die Winkelstellung bzw. die Entfernung des Retroreflektors berührungslos messbar, sofern die Dimension des Retroreflektors in der Ebene der Abtastung mit dem Laserstrahl bzw. orthogonal zur Achse des rotierenden Spiegels bekannt ist. Ist der vorbekannte Retroreflektor ausserdem an einer definierten Stelle eines Objekts angeordnet, oder ist ein vorbekanntes Objekt zwischen dem vorbekannten Retroreflektor und dem Fotodetektor so angeordnet, dass es den Laserstrahl unterbricht, so kann die Rechenschaltung nach dem gleichen Prinzip die Distanz und Position des Objekts errechnen. Dabei können zusätzliche Code-Schilder am Objekt angeordnet sein, mit denen die Rechenschaltung das Objekt identifizieren kann.

Im unmittelbar nachfolgenden wird zur Vereinfachung der Erläuterungen davon ausgegangen, dass ein Objekt bzw. ein Code-Schild stets in einer im wesentlichen orthogonal zur Winkelhalbierenden des Blickwinkels orientierten Ebene liegt. Ist das Objekt bzw. Code-Schild um einen bekannten Winkel windschief zur Winkelhalbierenden des Blickwinkels orientiert, so sind die von der Rechenschaltung errechneten Distanzen vom Objekt bzw. Code-Schild zum optischen Zentrum der Sensorvorrichtung um den Sinus dieses Winkels zu berichtigen.

Ist in einer Linie von Maschinen zur automatischen Bearbeitung und von Einrichtungen zur automatischen Behandlung von elektronischen Bauelementen der Bestückungsroboter R mit einer Sensorvorrichtung der vorstehend angegebenen Art versehen, so liefert die Rechenschaltung die Angabe der Distanz und Position der Maschinen B1-B4 und Einrichtungen E1-E2, jedoch nur in der Ebene der Abtastung mit dem Laserstrahl bzw. orthogonal zur Achse des rotierenden Spiegels. Zur Automatisierung der Bewegungen des Bestückungsroboters R fehlt noch die Information in Richtung parallel zur Achse des rotierenden Spiegels bzw. orthogonal zur Ebene der Abtastung mit dem Laserstrahl, denn die mit einer Sensorvorrichtung der vorstehend angegebenen Art erhaltene Information ist nur zweidimensional, was zur Automatisierung der Bewegungen des Bestückungsroboters R unzulänglich ist.

Eine Behebung dieser Unzulänglichkeit durch die Kombination von zwei Sensorvorrichtungen der vorstehend angegebenen Art, wie beispielsweise in DE-A-3 241 510 beschrieben, ist aufwendig und ausserdem wegen der beschränkten Platzverhältnisse am Bestückungsroboter störend.

Aufgabe der Erfindung ist es, eine Sensorvorrichtung der vorstehend angegebenen Art so zu verbessern, dass ein einziger Sensor eine dreidimensionale Information liefert, die insbesondere zur Automatisierung der Bewegungen des Roboters ausreicht.

Zur Lösung dieser Aufgabe ist eine Sensorvorrichtung der eingangs angegebenen Art erfindungsgemäss gekennzeichnet durch die im Anspruch 1 angegebene Kombination von Merkmalen. Eine Verwendung der Sensorvorrichtung zur Steuerung eines Bestückungsroboters für eine Linie von Maschinen und/oder Einrichtungen ist im Anspruch 14 definiert. Ein Verfahren zur selbsttätigen Ermittlung einer Positionsreferenz eines Roboters mit Hilfe der Sensorvorrichtung ist im Anspruch 16 definiert. Eine Anwendung des Verfahrens zur Steuerung eines in drei zueinander orthogonalen Richtungen bewegbaren Bestückungsroboters für eine Linie von Maschinen und/oder Einrichtungen ist im Anspruch 19 definiert. Vorteilhafte Weiterbildungen sind in den abhängigen Ansprüchen definiert.

Mit der erfindungsgemässen Sensorvorrichtung genügt eine einzige Abtasteinrichtung zum Positionieren des Bestückungsroboters mit Hilfe eines erfindungsgemässen Codefelds und gegebenenfalls auch noch zum Lesen von Informationen in zusätzlichen Codefeldern.

Zum einen ermöglicht nämlich die Erfindung, an den Maschinen bzw. Einrichtungen und an den Magazinen deren Positionen und Dimensionen einfach und gegebenenfalls in einem automatisch ablaufenden Vorgang von der Rechenschaltung feststellen zu lassen, um der Steuerung des Bestückungsroboters als Information zugeleitet zu werden. Der Bestückungsroboter lernt einfach und gegebenenfalls in einem automatisch ablaufenden Vorgang die Positionen und Dimensionen der Maschinen bzw. Einrichtungen und Magazine. Danach können die verschiedenen Positionen von Magazinen an den verschiedenen Maschinen bzw. Einrichtungen automatisch vom Greifer angefahren und die verschiedenen Magazine ihrem Typ entsprechend gehandhabt werden.

Zum anderen ist es mit der Erfindung möglich, an den Maschinen, Einrichtungen und Magazinen, auf demselben oder anderen Codeträgern, zusätzlich und in vorbestimmter Position relativ zum erfindungsgemässen Codefeld weitere Codefelder vorzusehen, die eine Information beispielsweise über den Typ einer Maschine, eines Magazins und dergleichen liefern. Weil der Bestückungsroboter die Positionen der zusätzlichen Codefelder relativ zum erfindungsgemässen Codefeld kennt, sobald er die Positionen und Dimensionen der Maschinen bzw. Einrichtungen und Magazine gelernt hat, ist es ihn möglich, auch die weiteren Codefelder in den Blickwinkel der Abtasteinrichtung zu bringen, um deren Information zu lesen.

Bei jedem Anfahren von Positionen durch den Greifer können diese Positionen zudem automatisch durch Vergleich der neu festgestellten Ist-Position mit der gespeicherten Soll-Position überprüft werden. Das Resultat dieser Überprüfung kann dazu verwendet werden, Distanzfehler, die beispielsweise auf die grosse Länge der Reihe von Maschinen bzw. Einrichtungen zurückzuführen sind, und verschobene Positionen, die beispielsweise durch unbeabsichtigtes Verschieben der Maschinen bzw. Einrichtungen oder durch Bewegungen und Erschütterungen des Bodens verursacht werden, automatisch zu korrigieren, wobei die ursprünglich gelernten Positionen entsprechend nachgeführt werden. Das Resultat der Überprüfung kann auch dazu verwendet werden, das Fehlen bestimmter Positionen oder Gegenstände zu erkennen, wenn beispielsweise an einer Position zur Magazinaufnahme kein Platz für ein zusätzliches Magazin oder an einer Position zur Magazinabgabe kein Magazin bereitsteht.

Schliesslich können Objekte, die nicht in der Steuerung des Bestückungsroboters programmiert sind, als solche erkannt werden, was dieser Steuerung erlaubt, Kollisionen des Bestückungsroboters mit Hindernissen wie verschobenen Magazinen, herunterhängenden Kabeln usw. zu vermeiden.

Nachstehend wird die Erfindung unter Bezugnahme auf die Zeichnung näher beschrieben. Auch sind weitere Vorteile der Erfindung aus dieser Beschreibung erkennbar. Es zeigen:

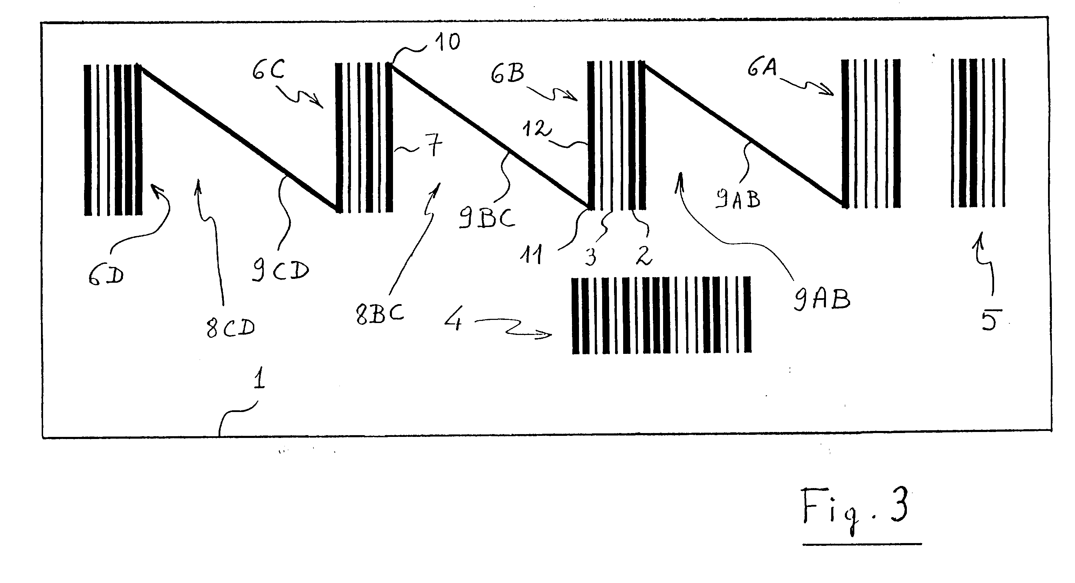

Fig. 3            eine Draufsicht eines Retroreflektors mit dem erfindungsgemässen Strichcode als Maske, zur Verwendung mit der bekannten Sensorvorrichtung der vorstehend angegebenen Art;

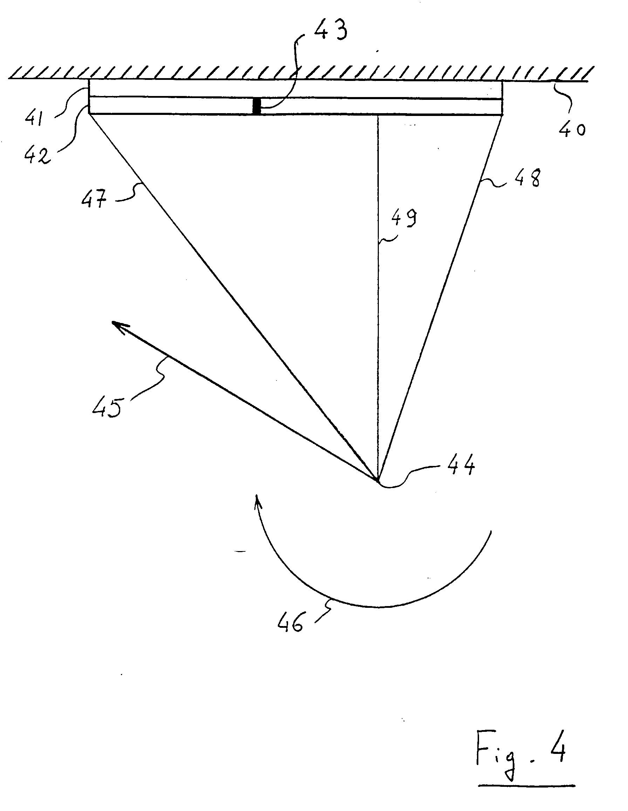

Fig. 4            ein geometrisches Schema der Winkel- und Längenverhältnisse von Strichcode und Lichtstrahl in der Sensorvorrichtung;

Fig. 5a und 5b    je ein geometrisches Schema der Winkel- und Längenverhältnisse von Grenzlinien und Flächenbereichen in einem Zwischenfeld mit Diagonalstrich und zwei optisch gleichen Zwischenfeldbereichen; und

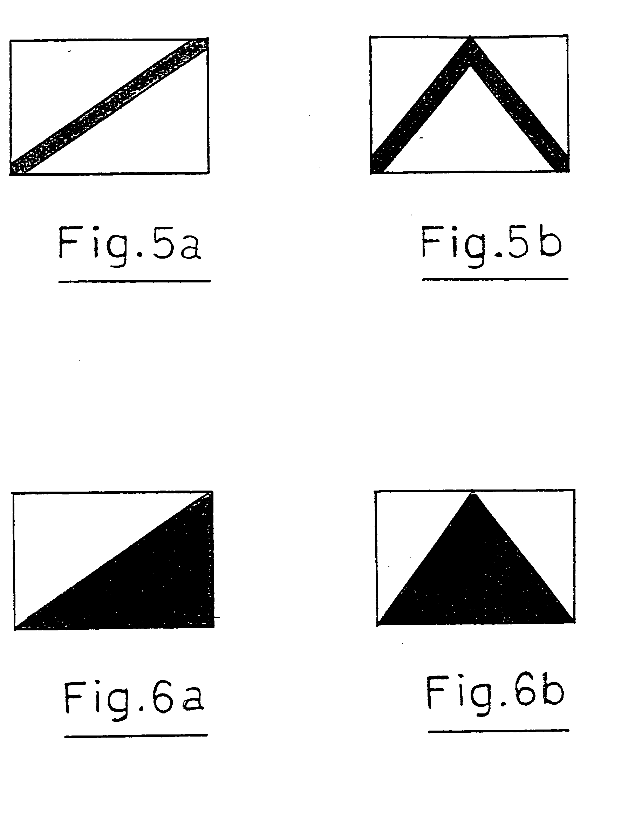

Fig. 6a und 6b    je ein geometrisches Schema der Winkel- und Längenverhältnisse von Grenzlinie und Flächenbereichen in einem Zwischenfeld mit zwei optisch verschiedenen Zwischenfeldbereichen.

In Fig. 3 ist ein an sich bekannter, beispielsweise im bereits zitierten Namco-Prospekt beschriebener Retroreflektor 1 in Draufsicht auf seine im wesentlichen ebenen retroreflektierende Oberfläche dargestellt. Der Retroreflektor 1 ist Teil einer Sensorvorrichtung beispielsweise der im zitierten Namco-Prospekt beschriebenen Art. Diese Sensorvorrichtung ist beispielsweise an einem Roboter wie dem in Fig. 1 und 2 dargestellten Bestückungsroboter R angebracht. Grundsätzlich kann aber anstelle eines Retroreflektors auch eine auf geeignete Weise das Licht streuende Fläche, d.h. Retrodiffusion statt Retroreflektion verwendet werden, sowie anstelle eines Laserstrahls ein andersartiger Lichtstrahl, und auch allgemein anstelle einer periodischen Abtastung mit Laserlicht und einem um ein optisches Zentrum rotierenden Spiegel eine globale Abtastung mit Licht aus einer LED-Zeile unter Verwendung einer Fotodetektoren-Zeile.

Auf der retroreflektierenden Oberfläche des Retroreflektors 1 ist eine im wesentlichen ebene Maske angebracht, die an gewissen Stellen undurchsichtige dikke balkenförmige Striche 2 und undurchsichtige dünne balkenförmige Striche 3 aufweist, und an ihren anderen Stellen durchsichtig ist. Die Maske ist beispielsweise eine fotografische Emulsionsschicht auf einer Glasplatte, welche ihrerseits über die retroreflektierende Oberfläche gelegt ist. Die Maske kann aber auch direkt mit Farbe auf der retroreflektierenden Oberfläche des Retroflektors 1 aufgemalt sein. Im Prinzip kann die Glasplatte auch vor der retroreflektierenden Oberfläche angeordnet sein. Die undurchsichtigen Striche sind mit Vorteil schwarz, um auch von Auge besser erkennbar zu sein.

Der Retroreflektor 1 mit der aufgebrachten Maske ist an einer vorbestimmten Stelle der hinteren Seite jeder Maschine und Einrichtung der Fig. 1, beispielsweise an der Stelle S in Fig. 2, in einer vorbestimmten Höhe über dem Boden angeordnet. Diese Höhe wird der Rechenschaltung des Roboters als entsprechende Vorgabe eingegeben und ist somit der Steuerung des Roboters bekannt, so dass es ihr möglich ist, den Roboter so zu bewegen, dass der Retroreflektor 1 in den Blickwinkel der Sensorvorrichtung kommt.

Ausserdem wird der Rechenschaltung des Roboters durch eine entsprechende Vorgabe bekanntgegeben, wo sich bei einem bestimmten Typ von Maschinen bzw. Einrichtungen die einzelnen Stellen von Belang, insbesondere die Pcsitionen, bei denen Magazine zu bringen bzw. abzuholen sind, relativ zum Retroreflektor 1 befinden. Sobald also der Rechenschaltung des Roboters auf die nachstehend erläuterte Weise die Position des Retroreflektors 1 bekannt wird, ist es der Steuerung des Roboters möglich, die erwähnten Positicnen automatisch vom Greifer anfahren zu lassen und die verschiedenen Magazine ihrem Typ entsprechend zu handhaben.

Auf dem Retroreflektor 1 bildet die Kombination von Strichen wie die Striche 2 und 3 verschiedene Strichcodes, die vom Lichtstrahl der Sensorvorrichtung abtastbar sind. Dazu sind die Striche, wie bei Strichcodes üblich, in Strichgruppen mit je einer in der Kombination von Strichen codierten Bedeutung eingeteilt, und jede Strichgruppe ist innerhalb von virtuellen (d.h. nicht mit einem tatsächlichen Rand versehenen) rechteckigen Strichgruppenbereichen angeordnet, um einen Informationsblock zu bilden.

Im Ausbildungsbeispiel der Fig. 3 bilden vier besondere Strichgruppenbereiche 6A, 6B, 6C, 6D zusammen ein virtuelles (d.h. nicht mit einem tatsächlichen Rand versehenes) im wesentlichen rechteckiges Codefeld. Der Retroreflektor 1 ist an einer Maschine bzw. Einrichtung der Fig. 1 so angeordnet, dass eine Mittellinie des rechteckigen Codefelds im wesentlichen parallel zu einer Abtastebene der Sensorvorrichtung liegt (die Mittellinie eines Rechtecks ist generell ein geometrisch wohldefinierter Begriff, aber in der vorliegenden Ausbildung der Erfindung kein tatsächlich vorhandener Strich, die erwähnte Mittellinie ist deshalb in Fig. 3 nicht eingezeichnet).

Im rechteckigen Codefeld bildet jeder der Strichgruppenbereiche 6A, 6B, 6C, 6D selber ein virtuelles (d. h. nicht mit einem tatsächlichen Rand versehenes) rechteckiges Positionierungsfeld, und zwar auf solche Weise, dass die betreffenden, virtuell die Strichgruppen umrandenden Rechtecke identisch sind. Zudem sind die Strichgruppen in ihren Rechtecken oder Strichgruppenbereichen 6A, 6B, 6C, 6D so orientiert, dass jeweils ein längerer Rand des Rechtecks oder Strichgruppenbereichs wie der Rand 7 oder 12 auch ein längerer Rand eines Striches ist. Schliesslich sind die Rechtecke oder Strichgruppenbereiche 6A, 6B, 6C, 6D so zueinander angeordnet, dass ihre virtuellen (d.h. nicht von einem tatsächlichen Strich dargestellten) kurzen Seiten kongruent ausgerichtet sind und ihre langen Seiten parallel zueinander liegen (im übrigen beziehen sich die Begriffe "lang" und "kurz" auf die besondere Darstellung gemäss Fig. 3, sie können aber im Rahmen der erfindung untereinander ausgetauscht werden). Im übrigen umfasst der Code in einem Positionierungsfeld jeweils eine Strichgruppe aus mindestens zwei rechteckigen Strichen und einem dazwischenliegenden rechteckigen Zwischenraum, wobei die Striche und Zwischenräume beispielsweise wie hell und dunkel optisch voneinander verschieden sind und deren Längsrichtung rechtwinklig zur Mittellinie des Codefelds über dessen ganze Ausdehnung verläuft.

Die jeweils benachbarten rechteckige Positionierungsfelder oder Strichgruppenbereiche 6A und 6B, bzw. 6B und 6C, bzw. 6C und 6D, sind in gleichen vorbestimmten Abständen voneinander angeordnet, so dass dazwischen jeweils gleiche virtuelle (d.h. nicht mit einem tatsächlichen Rand versehene) rechteckige Zwischenfelder 8AB, 8BC, 8CD definiert sind. Das Codefeld ist also von einer entlang der Mittellinie alternierenden Folge von Positionierungsfeldern 6A, 6B, 6C, 6D und Zwischenfeldern 8AB, 8BC, 8CD exakt gefüllt.

Die Positionierungsfelder bzw. Strichgruppenbereiche 6A, 6B, 6C, 6D bilden eine Reihe. Jede Strichgruppe ist für die Stellung des sie betreffenden Strichgruppenbereichs 6A, 6B, 6C, 6D in der Reihe codiert, vorzugsweise mit einer Zahl aus einer Reihe von aufeinanderfolgenden Zahlenwerten. In Ausbildungsbeispiel nach Fig. 3 ist der Strichgruppenbereich 6A mit der Zahl 0, der Strichgruppen bereich 6B mit der Zahl 1, der Strichgruppenbereich 6C mit der Zahl 2 und der Strichgruppenbereich 6D mit der Zahl 3 codiert. Insgesamt entspricht also der in einem Positionierungsfeld angeordnete Code einer Position dieses Positionierungsfeldes im Codefeld, und dieser Code umfasst eine von der Abtasteinrichtung auswertbare Positionsinformation, die angibt, an welcher Stelle sich das Positionierungsfeld in einer von den Positionierungsfeldern entlang der Mittellinie gebildeten Reihenfolge befindet, wobei die aufeinanderfolgenden Positionen des Positionierungsfeldes im Codefeld vorzugsweise durch aufeinanderfolgende Zahlenwerte ausgedrückt sind.

In jedem der rechteckigen Zwischenfelder 8AB, 8BC, 8CD ist je ein Diagonalstrich 9AB, 9BC, 9CD angeordnet, der die einander diagonal gegenüberliegenden Enden von einander gegenüberliegenden Rändern der benachbarten Positionierungsfelder bzw. Strichgruppenbereiche verbindet, wie beispielsweise der Diagonalstrich 9BC ein Ende 10 des Randes 7 des Strichgruppenbereichs 6C mit einem Ende 11 des Randes 12 des Strichgruppenbereichs 6B verbindet. Der Diagonalstrich 9AB, 9BC, 9CD stellt im jeweiligen Zwischenfeld 8AB, 8BC, 8CD eine die Mittellinie schräg schneidende Grenzlinie zwischen zwei Flächenbereichen des Zwischenfelds dar. Bei der Abtastung dieser Grenzlinie durch die Abtasteinrichtung erzeugt der Helligkeitskontrast zwischen den Zwischenfeldern und dem Diagonalstrich in der Abtasteinrichtung eine Variation der Beleuchtungsdichte, richtiger gesagt zwei kurz aufeinanderfolgende entgegensetzte Variationen der Beleuchtungsdichte, was eine Bestimmung der Blickrichtung ermöglicht, die nachstehend im Zusammenhang mit Fig. 4 näher erläutert wird.

Die vorstehend als Beispiel beschriebene Anordnung von vier Positionierungsfelder bzw. Strichgruppenbereichen 6A, 6B, 6C, 6D und drei Diagonalstrichen 9AB, 9BC, 9CD im jeweiligen Zwischenfeld 8AB, 8BC, 8CD kann ohne weiteres auf eine höhere, vorzugsweise aber gerade Anzahl von Strichgruppenbereichen und die entsprechende um Eins kleinere ungerade Anzahl von vorzugsweise einander parallelen Diagonalstrichen erweitert werden.

Vorzugsweise sind die Diagonalstriche 9AB, 9BC, 9CD, wie in Fig. 3 dargestellt, parallel zueinander orientiert, obschon dies nicht zwingend ist, wenn die Rechenschaltung über die zur weiteren Verarbeitung nötige Information verfügt.

Im Hinblick auf die Beschreibung des erfindungsgemässen Verfahrens zur selbsttätigen Positionierung des Roboters in bezug auf den Retroreflektor mit der daraufliegenden Maske ist es vorerst zweckmässig, das in Fig. 4 dargestellte geometrische Schema der Winkel- und Längenverhältnisse von Strichcode und Lichtstrahl in der Sensorvorrichtung zu erläutern.

Es wird dabei (besonders wegen der einfacheren geometrischen Verhältnisse) von der bekannten, beispielsweise im bereits zitierten Namco-Prospekt beschriebenen Abtasteinrichtung ausgegangen. Grundsätzlich aber könnte man die daraus bekannte periodische Abtastung mit Laserlicht und einem um ein optisches Zentrum rotierenden Spiegel durch eine globale Abtastung mit Licht aus einer LED-Zeile unter Verwendung einer Fotodetektoren-Zeile ersetzen, ohne sich vom Prinzip der nachfolgenden Erläuterungen zu entfernen.

In Fig. 4 ist schematisch eine Wandung 40 einer Maschine oder Einrichtung dargestellt, an welcher der Retroreflektor 41 angeordnet ist. Auf dem Retroreflektor 41 ist die Maske 42 angeordnet, die Strichcodes trägt, von denen nur eine Stelle 43 eines Diagonalstriches wie die Diagonalstriche 9AB, 9BC bzw. 9CD der Fig. 3 dargestellt ist.

Der Lichtstrahl geht vom Punkt 44 aus und wird vom Retroreflektor 41 zum Punkt 44 zurückgesandt, sofern dies nicht vom Strichcode der Maske 42 verhindert wird. Der Punkt 44 hat also im Schema der Fig. 4 die Bedeutung eines optischen Zentrums der Sensorvorrichtung. Der Retroreflektor 41 und die Maske 42 sind im Schema der Fig. 4 mit einer wesentlichen Dicke dargestellt, diese dient aber nur der Sichtbarmachung des Retroreflektors 41 bzw. der Maske 42 und gilt im nachstehenden als unwesentlich und vernachlässigbar.

Aufgrund der Auslenkung des Lichtstrahls durch den konstant rotierenden Spiegel bewegt sich der Lichtstrahl fortlaufend um den Punkt 44, beispielsweise im Uhrzeigersinn. Die Winkelpositionen des Lichtstrahls werden in Fig. 4 im Uhrzeigersinn positiv gemessen, wobei ihr Nullwert bei einer in der Sensorvorrichtung vom Winkelreferenzdetektor vorbestimmten Winkelposition liegt, die in Fig. 4 von der Referenzrichtung 45 dargestellt wird. Im Laufe einer Umdrehungsperiode des Spiegels wächst die Winkelposition in Richtung des Pfeils 46 um den Punkt 44 von einem Wert am (nicht dargestellten) Anfang des Blickwinkels zu einem Zeitpunkt $t_A$, über einen Wert am Anfang der Abtastung der Maske bei der Linie 47 zu einem Zeitpunkt $t_U$ und danach einen Wert am Ende der Abtastung der Maske bei der Linie 48 zu einem Zeitpunkt $t_V$, bis zu einem (nicht dargestellten) Wert am Ende des Blickwinkels zu einem Zeitpunkt $t_E$. Auf die Winkelhalbierende des Blickwinkels fällt dabei die Winkelposition zu einem Zeitpunkt $t_M$, welcher der Gleichung $t_M = \frac{1}{2} \cdot (t_E - t_A)$ entspricht. Dieser Vorgang wiederholt sich bei jeder Umdrehung des konstant rotierenden Spiegels, was zur periodischen Abtastung eines von der Konstruktion der Sensorvorrichtung vorbestimmten Blickwinkels führt.

Wie bereits erwähnt, wird zur Vereinfachung der nachfolgenden Erläuterungen davon ausgegangen, dass der Retroreflektor 41 und die Maske 42 in einer im wesentlichen orthogonal zur Winkelhalbierenden des Blickwinkels orientierten Ebene liegen. Folglich fällt die Winkelhalbierende des Blickwinkels mit dem Lot 49 vom optischen Zentrum 44 zum Retroreflektor 41 und zur Maske 42 zusammen.

Weil der Rechenschaltung des Roboters als entsprechende Vorgabe bekannt ist, in welcher Höhe über dem Boden sich der Retroreflektor 41 befindet, ist es der Steuerung möglich, den Roboter so zu bewegen, dass der Retroreflektor 41 in den Blickwinkel der Sensorvorrichtung kommt und der Fotodetektor einen retroreflektierten Lichtstrahl empfängt, wenn der ausgehende Lichtstrahl auf den Retroreflektor 41 trifft. Nachdem der Retroreflektor 41 auf diese Weise in den Blickwinkel gekommen ist, läuft das Verfahren zur selbsttätigen Positionierung eines Roboters mit der Sensorvorrichtung folgenderweise ab.

In einer ersten Phase erhält die Steuerung des Roboters von der Rechenschaltung die nötige Information, um sowohl die Winkelposition beim Lot 49 als auch die Länge des Lots 49, also den Abstand vom dem optischen Zentrum 44 zum Retroreflektor 41, so einzustellen, dass der Blickwinkel alle Strichgruppenbereiche der Maske, also beim Beispiel gemäss Fig. 3 alle vier Strichgruppenbereiche 6A, 6B, 6C, 6D, umfasst. In anderen Worten, es wird dabei erreicht, dass die Impulse des Fotodetektors, die den Strichen dieser Strichgruppen entsprechen, alle im Zeitintervall zwischen $t_A$ und $t_E$ auftreten. Der zuerst abgetasteten Strichgruppe entspricht ein frühester Impuls, der zum Zeitpunkt $t_{1A}$ anfängt, und ein spätester Impuls, der zum Zeitpunkt $t_{1E}$ aufhört. Der zuletzt abgetasteten Strichgruppe entspricht ein frühester Impuls, der zum Zeitpunkt $t_{2A}$ anfängt, und ein spätester Impuls, der zum Zeitpunkt $t_{2E}$ aufhört.

Der weitere Vorgang in dieser ersten Phase ist am einfachsten zu erklären, wenn das optischen Zentrum 44 in einer ersten Etappe auf die Mittelsenkrechte der Gesamtlänge der Strichgruppenbereiche 6A, 6B, 6C, 6D und in einer zweiten Etappe möglichst nahe an die Strichgruppenbereiche 6A, 6B, 6C, 6D gebracht wird.

Beispielsweise wird der Roboter zu diesem Zweck, zunächst nur in der Horizontalen, bewegt, bis der Zeitpunkt $t_M$ der Gleichung $t_M = \frac{1}{2} \cdot (t_{2E} - t_{1A})$ entspricht, womit erreicht wird, dass die Winkelhalbierende des Blickwinkels mit der Mittelsenkrechten der Gesamtlänge der Strichgruppenbereiche zusammenfällt, d.h. damit kongruent ist, und das optische Zentrum 44, zunächst erst in der Horizontalen, vor den Strichgruppenbereichen 6A, 6B, 6C, 6D zentriert liegt. Danach wird der Roboter, weiterhin nur in der Horizontalen, so gesteuert, dass der Zeitpunkt $t_M$ weiterhin der Gleichung $t_M = \frac{1}{2} \cdot (t_{2E} - t_{1A})$ entspricht und zusätzlich die Zeitpunkte $t_{1A}$ und $t_{2E}$ den Gleichungen $t_{1A} = t_A$ und $t_{2E} = t_E$ zu entsprechen kommen, womit nun erreicht wird, dass die Gesamtlänge der Strichgruppenbereiche den gesamten Blickwinkel füllt. Die dazu nötige Information erhält die Steuerung selbstverständlich laufend von der Rechenschaltung.

In einer zweiten Phase erhält die Steuerung von der Rechenschaltung die nötige Information, um den Abstand zwischen dem optischen Zentrum 44 und dem Retroreflektor 41, also die Länge des Lots 49, so zu reduzieren, dass der Blickwinkel nur mehr zwei benachbarte Strichgruppenbereiche umfasst. Welches diese beiden benachbarten Strichgruppenbereiche sind, wird aufgrund der Codierung ihrer Strichgruppen und einer entsprechenden Vorgabe in der Steuerung ausgewählt. Zweckmässigerweise handelt es sich dabei um benachbarte Strichgruppenbereiche in der Mitte der Reihe, also beim Beispiel gemäss Fig. 3 um die Strichgruppenbereiche 6B und 6C, die mit den Zahlen 2 bzw. 3 codiert sind, welche von der Rechenschaltung erkannt werden. Selbstverständlich bleibt das optische Zentrum 44 dabei in der Horizontalen vor den Strichgruppenbereichen 6A, 6B, 6C, 6D zentriert.

Mit dieser Annäherung des Roboters an den Retroreflektor wird im wesentlichen bezweckt, die Winkelwerte, unter denen die verschiedenen Strichcodes der Maske 42 vom optischen Zentrum 44 aus gesehen werden, zu vergrössern und dadurch die Präzision der Positionierung zu erhöhen. Der nunmehr einzige im Blickwinkel liegende Diagonalstrich ist der Diagonal strich 9BC, von dem eine Stelle 43 in Fig. 4 dargestellt ist.

In einer dritten Phase erhält die Steuerung von der Rechenschaltung die nötige Information, um den Roboter, diesmal nur in der Vertikalen, zu bewegen, bis der Zeitpunkt, bei dem die Winkelposition des Lichtstrahls auf die Stelle 43 des Diagonalstriches 9BC fällt bzw. die Stelle 43 abgetastet wird, mit dem Zeitpunkt $t_M$ zusammenfällt, womit erreicht wird, dass das optische Zentrum 44 nun auch in der Vertikalen vor den Strichgruppenbereichen 6B, 6C zentriert ist. In der Horizontalen wurde der Roboter dabei nicht bewegt, so dass der Blickwinkel weiterhin nur die benachbarten Strichgruppenbereiche 6b und 6C umfasst und das optische Zentrum 44 in der Horizontalen vor den Strichgruppenbereichen 6A, 6B, 6C, 6D zentriert geblieben ist.

Folglich liegt nun das optische Zentrum 44 in der Horizontalen wie auch in der Vertikalen vor den Strichgruppenbereichen 6A, 6B, 6C, 6D zentriert.

Daraufhin ist die Rechenschaltung in der Lage, die Koordinaten des optischen Zentrums 44 in bezug auf den Mittelpunkt der Strichgruppenbereiche 6A, 6B, 6C, 6D zu errechnen. In kartesischen Koordinaten ist die Koordinate in Richtung senkrecht zum Retroreflektor 41 und zur Maske 42 durch die Länge des Lots 49 gegeben, während in den Richtungen parallel zum Retroreflektor 41 und zur Maske 42 die Koordinate gleich Null ist, weil ja das optische Zentrum 44 vor den Strichgruppenbereichen 6A, 6B, 6C, 6D zentriert ist (eben darin liegt die vorangehend erwähnte Vereinfachung). Diese Koordinaten bzw. die einzige tatsächlich zu bestimmende Koordinate wird zur Verwendung durch die Steuerung als Positionsreferenz des Roboters in bezug auf den Retroreflektor von der Rechenschaltung bereitgestellt und der Steuerung zugeleitet. Von nun an ist die Steuerung des Roboters fähig, an der betreffenden Maschine bzw. Einrichtung die einzelnen Stellen von Belang, insbesondere die Positionen, bei denen Magazine zu bringen bzw. abzuholen sind, automatisch vom Greifer anfahren zu lassen und die verschiedenen Magazinen ihrem Typ entsprechend zu handhaben.

Generell gibt es zwei einander äquivalente Möglichkeiten, die lokalen Referenzsysteme des Codeträgers und der Abtasteinrichtung aufeinander zu beziehen, nämlich durch Erstellen einer direkten Beziehung oder einer indirekten Beziehung über ein gemeinsames oder mehrere aufeinander bezogene Koordinatensysteme. Zum einen kann in der Abtastebene die Winkellage der Blickrichtung um das optische Zentrum auf eine in vorbestimmter Winkellage zur Ebene des Codeträgers liegende Referenzrichtung bezogen sein. Zum anderen kann die Ebene des Codeträgers in einer in einem Koordinatensystem vorbestimmten Lage angeordnet sein, während in der Abtastebene die Winkellage der Blickrichtung um das optische Zentrum auf eine Referenz richtung von im Koordinatensystem vorbestimmter Winkellage bezogen ist.

Vorzugsweise werden aber alle Berechnungen dadurch vereinfacht, dass die Referenzrichtung orthogonal zur Ebene des Codeträgers liegt und die Verschiebungen in drei zueinander orthogonalen Richtungen erfolgen, von denen die eine parallel zur Referenz richtung und die beiden anderen parallel zur Ebene des Codeträgers liegen.

Zur Ausführung des erfindungsgemässen Verfahrens würde es genügen, dass die Strichgruppenbereiche im Blickwinkel liegen, während es prinzipiell nicht nötig ist, dass die Winkelhalbierende des Blickwinkels mit der Mittelsenkrechten der Strichgruppenbereiche zusammenfällt. Wenn die Winkelhalbierende des Blickwinkels nicht mit der Mittelsenkrechten der Strichgruppenbereiche zusammenfällt, ist das optische Zentrum der Sensorvorrichtung nicht vor den Strichgruppenbereichen zentriert, worauf die trigonometrische Berechnung der Position des optischen Zentrums relativ zum Retroreflektor komplizierter und die Rechenschaltung sowie die Steuerung entsprechend aufwendiger werden, die Berechnung und die entsprechende Ausbildung der Rechenschaltung sowie der Steuerung bleiben jedoch im Bereich des allgemeinen Fachwissens und brauchen deshalb nicht im einzelnen beschrieben zu werden. Beispielsweise kann die Rechenschaltung als Mikroprozessor ausgebildet sein und entsprechend programmiert werden.

Zur Ausführung des erfindungsgemässen Verfahrens würde es auch genügen, dass die Gesamtlänge der Strichgruppenbereiche den gesamten Blickwinkel füllt, während es nicht nötig ist, dass nur zwei ausgewählte der Strichgruppenbereiche den gesamten Blickwinkel füllen. Wenn kein Annäherung der Sensorvorrichtung an den Retroreflektor stattfindet, bleibt gerade nur die erreichte Präzision der Positionsbestimmung in der Horizontalen wie auch in der Vertikalen geringer als beim beschriebenen Verfahren mit einer solchen Annäherung.

Schliesslich ist es zur Ausführung des erfindungsgemässen Verfahrens nicht unerlässlich, dass das optische Zentrum 44 auch in der Vertikalen vor den Strichgruppenbereichen 6B, 6C zentriert wird. Generell fällt die Winkelposition des Lichtstrahls zu einem gewissen Zeitpunkt $t_H$ auf den Diagonalstrich 9BC, d.h. eine Stelle 43 des Diagonalstrichs 9BC wird zum Zeitpunkt $t_H$ abgetastet. Dieser Zeitpunkt $t_H$ variiert linear mit der Lage des optischen Zentrums 44 in der Vertikalen vor den Strichgruppenbereichen 6B, 6C. Es wird davon ausgegangen, dass das optische Zentrum 44 in der Horizontalen vor den Strichgruppenbereichen 6B, 6C zentriert ist, wie im vorangehenden beschrieben wurde, dass also die Gleichung $t_M = \frac{1}{2} \cdot (t_{2E} - t_{1A})$ gilt. Unter diesen Umständen fällt der Zeitpunkt $t_H$ dann mit dem Zeitpunkt $t_M$ zusammen, wenn das optische Zentrum 44 auch in der Vertikalen vor den Strichgruppenbereichen 6B, 6C zentriert ist. Der Zeitpunkt $t_H$ fällt jedoch mit dem Zeitpunkt

$t_{1E}$ zusammen, wenn das optische Zentrum 44 in der Vertikalen vor dem zuletzt abgetasteten Rand der zuerst abgetasteten Strichgruppe liegt, und mit dem Zeitpunkt $t_{2A}$ zusammen, wenn das optische Zentrum 44 in der Horizontalen vor dem zuerst abgetasteten Rand der zuletzt abgetasteten Strichgruppe liegt. Somit variiert dieser Zeitpunkt $t_H$ linear zwischen den Extremwerten $t_{1E}$ und $t_{2A}$ in Abhängigkeit von der Lage des optischen Zentrums 44 in der Vertikalen vor den Strichgruppenbereichen 6B, 6C. Eine einfache Proportionenrechnung erlaubt also der Rechenschaltung, die Lage des optischen Zentrums 44 in der Vertikalen vor den Strichgruppenbereichen 6B, 6C in Abhängigkeit von den Zeitpunkten $t_H$, $t_{1E}$ und $t_{2A}$ zu errechnen und zur Verwendung durch die Steuerung des Roboters bereitzustellen.

Die beschriebene Bereitstellung der Information zur Lage des optischen Zentrums der Sensorvorrichtung in der Horizontalen und in der Vertikalen vor den Strichgruppenbereichen, also vor dem Retroreflektor und der Maske, und die Weiterleitung dieser Information an die Rechenschaltung ermöglicht der Steuerung des Roboters, sich gegebenenfalls vor anderen Strichgruppenbereichen wie beispielsweise vor den Strichgruppenbereichen 4 oder 5 in Fig. 3 zu positionieren, um weitere Informationen in diesen zusätzlichen Codefeldern zu lesen. Beispielsweise ist auf dem Retroreflektor 1 im Strichgruppenbereich 4 der Typ der Maschine bzw. Einrichtung codiert, auf welcher der Retroreflektor 1 angebracht ist, während ein weiterer Strichgruppenbereich 5 für zusätzliche codierte Angaben verwendbar ist. Zudem können ein oder mehrere weitere Retroreflektoren mit zusätzlichen Codefeldern vorgesehen und in vorbestimmter Position relativ zum Retroreflektor 1 angeordnet sein. Da der Rechenschaltung die vorbestimmte Position dieser zusätzlichen Codefelder relativ zum Codefeld des Retroreflektors 1 bekannt ist, ist es der Steuerung des Roboters möglich, diese zusätzlichen Codefelder ohne vorangehende Suchaktion anzusteuern, um deren Information zu lesen.

Somit genügt eine einzige Abtasteinrichtung sowohl zur vorerst nötigen Ermittlung der Position des Bestückungsroboters relativ zu den Maschinen bzw. Einrichtungen und deren Magazinpositionen wie auch danach zum Ablesen von weiteren Codefeldern, die eine Information beispielsweise über den Typ einer Maschine, eines Magazins und dergleichen liefern. Weil der Bestückungsroboter die Positionen der zusätzlichen Codefelder kennt, sobald er die Positionen und Dimensionen an den Maschinen bzw. Einrichtungen und an den Magazinen gelernt hat, ist es ihm möglich, auch die weiteren Codefelder anzufahren und in den Blickwinkel der Abtasteinrichtung zu bringen, um deren Information zu lesen.

Durch die beschriebene Bereitstellung der Information zur Lage des optischen Zentrums der Sensorvorrichtung in der Horizontalen und in der Vertikalen vor den Strichgruppenbereichen, also vor dem Retroreflektor und der Maske, und durch die Weiterleitung dieser Information an die Steuerung eines Roboters lässt sich beispielsweise ein Bestückungsroboter für eine Linie von Maschinen und/oder Einrichtungen insbesondere zur automatischen Bearbeitung und/oder von Einrichtungen zur automatischen Behandlung von elektronischen Bauelementen so steuern, dass die richtigen Magazinen zu den richtigen Position der richtigen Maschinen oder Einrichtungen gebracht werden bzw. von diesen Positionen abgeholt werden.

Bei einem beliebigen dieser Positioniervorgänge können die Rechenschaltung der Sensorvorrichtung und/oder die Steuerung auch noch überprüfen, ob die aktuelle Soll-Position mit der früher ermittelten Soll-Position übereinstimmt. Ist dies nicht der Fall, so ist beispielsweise die betreffende Maschine und/oder Einrichtung verschoben oder sonstwie verändert worden, was beispielsweise einen Alarm auslöst.

In den Fig. 5a, 5b, 6a und 6b sind jeweils verschiedene Varianten der Ausbildung des Codes in einem Zwischenfeld als geometrisches Schema dargestellt. Der nun dargestellte Rahmen entspricht jeweils schematisch dem Zwischenfeld, das bereits im vorangehenden im Zusammenhang mit Fig. 3, dort jedoch nur mit einem virtuellen, d.h. nicht durch einen tatsächlichen Strich dargestellten Rand beschrieben wurde.

In Fig. 5a ist zur besseren Übersicht nochmals die Ausbildung dargestellt, die bereits im vorangehenden im Zusammenhang mit Fig. 3 beschrieben wurde. Ein Diagonalstrich durchquert das Zwischenfeld im wesentlichen diagonal und halbiert es annähernd in zwei Zwischenfeldbereiche von optisch gleicher Beschaffenheit. Der Diagonalstrich ist dunkel und die Zwischenfeldbereiche sind hell (oder umgekehrt), d.h. der Diagonalstrich ist von den Zwischenfeldbereichen optisch verschieden. Jeder der beiden Zwischenfeldbereiche erzeugt mit dem Diagonalstrich eine Grenzlinie, die das Zwischenfeld annähernd diagonal durchquert, es gibt somit zwei einander parallele Grenzlinien. Die Abtasteinrichtung reagiert auf den optischen Kontrast an den beiden Grenzlinien, indem dieser Kontrast darin eine Variation der Beleuchtungsdichte erzeugt, die zur Bestimmung einer Blickrichtung führt.

In Fig. 5b ist eine Ausbildung dargestellt, die von der Ausbildung nach Fig. 5a im wesentlichen durch spiegelsymmetrische Verdoppelung abgeleitet ist, wobei das Zwischenfeld entlang der Mittellinie in zwei Zwischenfeldteile im wesentlichen halbiert ist und die Diagonalstriche des einen und des anderen Zwischenfeldteils im Winkel zueinander liegen.

In Fig. 6a ist eine Ausbildung dargestellt, bei der das Zwischenfeld im wesentlichen diagonal in zwei optisch verschiedene Zwischenfeldbereiche im wesentlichen halbiert ist. Der eine Zwischenfeldbereich ist dunkel und der andere hell, d.h. eine Grenzlinie durchquert das Zwischenfeld im wesentlichen diagonal. Die Abtasteinrichtung reagiert auf den optischen Kontrast an dieser Grenzlinie, indem dieser Kontrast darin eine Variation der Beleuchtungsdichte erzeugt, die zur Bestimmung einer Blickrichtung führt.

In Fig. 6b ist eine Ausbildung dargestellt, die von der Ausbildung nach Fig. 6a im wesentlichen durch spiegelsymmetrische Verdoppelung abgeleitet ist, wobei das Zwischenfeld entlang der Mittellinie in zwei Zwischenfeldteile im wesentlichen halbiert ist und die Grenzlinien des einen und des anderen Zwischenfeldteils im Winkel zueinander liegen.

Es sind durchaus noch andere Ausbildungen des Codes in einem Zwischenfeld möglich, bei denen der Code in mindestens einem Zwischenfeld zumindest eine die Mittellinie schräg schneidende Grenzlinie zwischen zwei Flächenbereichen des Zwischenfelds umfasst, und die Flächenbereiche dazu ausgebildet sind, bei der Abtastung ihrer gemeinsamen Grenzlinie durch die Abtasteinrichtung in dieser eine Variation der Beleuchtungsdichte zu erzeugen, die zur Bestimmung einer Blickrichtung führt. Insbesondere ist zu verstehen, dass die in den Fig. 5a, 5b, 6a und 6b dargestellten Zeichnungen um die beiden virtuellen Mittellinien ihrer Rechtecke spiegelbildlich umkehrbar, d.h. in den Fig. 5a, 5b, 6a und 6b die Begriffe "oben" und "unten" untereinander austauschbar sind, unebenfalls auch, dass die Begriffe "hell" und "dunkel" untereinander austauschbar sind, ohne sich vom Prinzip der Erfindung zu entfernen.

In allen vorangehend beschriebenen Ausbildungen des Codes umfasst das Codefeld vorzugsweise eine gerade Anzahl von untereinander gleich grossen Positionierungsfeldern und eine entsprechende, um Eins kleinere ungerade Anzahl von untereinander gleich grossen Zwischenfeldern, und die Zwischenfelder sind entweder untereinander gleich oder spiegelgleich. In der bevorzugten Ausbildung gemäss Fig. 3 umfasst das Codefeld genau vier Positionierungsfelder und drei Zwischenfelder.

## Patentansprüche

1.  Sensorvorrichtung zur Feststellung der relativen Lage von zwei zueinander verschiebbaren Objekten, mit

    -   einem im wesentlichen ebenen Codeträger für einen optischen Code, der am einen der Objekte in einem Codefeld des Codeträgers angeordnet ist,
    -   einer am anderen Objekt angeordneten Abtasteinrichtung zur optischen Abtastung eines vorbestimmten Blickwinkels, der in einer Abtastebene liegt und von einem optischen Zentrum der Abtasteinrichtung ausgeht, wobei diesem optischen Zentrum Lichtstrahlen aus innerhalb des Blickwinkels liegenden Lichteinfallsrichtungen zugeleitet werden, und zur Bestimmung einer im Blickwinkel liegenden Blickrichtung Mittel zum

    -   Erfassen einer Beleuchtungsdichte an mindestens einem Fotodetektor der Abtasteinrichtung im Laufe der Abtastung des Blickwinkels nach der Lichteinfallsrichtung,
    -   Mittel zur Ermittlung einer Variation der Beleuchtungsdichte in Abhängigkeit der Lichteinfallsrichtung, und Mittel zum
    -   Bestimmen einer mit der Lichteinfallsrichtung übereinstimmenden Blickrichtung, wenn die Variation der Beleuchtungsdichte in Abhängigkeit der Lichteinfallsrichtung einem Helligkeitskontrast entspricht, der einen vorgegebenen Helligkeitskontrast überschreitet, vorgesehen sind, und mit

    -   einer Rechenschaltung,
    -   wobei das Codefeld durch Verschiebung der Objekte zueinander in den Blickwinkel der Abtasteinrichtung bringbar ist und
    -   der Code dazu ausgebildet ist, bei dessen Abtastung durch die Abtasteinrichtung in dieser mindestens eine zur Bestimmung einer Blickrichtung führenden Variation der Beleuchtungsdichte zu erzeugen,

    **dadurch gekennzeichnet, dass**

    -   das Codefeld im wesentlichen rechteckig mit einer im wesentlichen parallel zur Abtastebene liegenden Mittellinie ausgebildet ist und mindestens zwei rechteckige Positionierungsfelder und ein dazwischenliegendes rechteckiges Zwischenfeld umfasst, wobei das Codefeld von einer entlang der Mittellinie alternierenden Folge von Positionierungsfeldern und Zwischenfeldern exakt gefüllt ist, und
    -   der Code in mindestens einem Zwischenfeld zumindest eine die Mittellinie schräg schneidende Grenzlinie zwischen zwei Flächenbereichen des Zwischenfelds umfasst, welche Flächenbereiche dazu ausgebildet sind, bei der Abtastung ihrer gemeinsamen Grenzlinie durch die Abtasteinrichtung in dieser eine zur Bestimmung einer Blickrichtung führende Variation der Beleuchtungsdichte zu erzeugen.

2.  Sensorvorrichtung nach Anspruch 1, **dadurch gekennzeichnet, dass** das Zwischenfeld im wesentlichen diagonal in zwei optisch verschiedene Zwischenfeldbereiche im wesentlichen halbiert ist, derart, dass die Zwischenfeldbereiche eine solche Ausbildung der Flächenbereiche darstellen, bei der die Grenzlinie das Zwischenfeld im wesentlichen diagonal durchquert.

3.  Sensorvorrichtung nach Anspruch 1, **dadurch gekennzeichnet, dass** das Zwischenfeld entlang der Mittelsenkrechten durch die Mittellinie in zwei Zwischenfeldteile im wesentlichen halbiert ist und die Zwischenfeldteile ihrerseits im wesentlichen diagonal in zwei optisch verschiedene Zwischenfeldbereiche im wesentlichen halbiert sind, derart, dass in jedem Zwischenfeldteil die Zwischenfeldbereiche eine solche Ausbildung der Flächenbereiche darstellen, bei der die Grenzlinie das Zwischenfeldteil im wesentlichen diagonal durchquert, wobei die Grenzlinien des einen und des anderen Zwischenfeldteils im Winkel zueinander liegen.

4. Sensorvorrichtung nach Anspruch 1, **dadurch gekennzeichnet, dass** ein Diagonalstrich das Zwischenfeld im wesentlichen diagonal durchquert und in zwei Zwischenfeldbereiche von optisch gleicher Beschaffenheit annähernd halbiert, wobei der Diagonalstrich von den Zwischenfeldbereichen optisch verschieden ist.

5. Sensorvorrichtung nach Anspruch 1, **dadurch gekennzeichnet, dass** das Zwischenfeld entlang der Mittelsenkrechten durch die Mittellinie in zwei Zwischenfeldteile im wesentlichen halbiert ist und in jedem Zwischenfeldteil ein Diagonalstrich das Zwischenfeldteil im wesentlichen diagonal durchquert und in jeweils zwei Zwischenfeldbereiche von optisch gleicher Beschaffenheit annähernd halbiert, wobei der Diagonalstrich von den Zwischenfeldbereichen optisch verschieden ist, wobei die Diagonalstriche des einen und des anderen Zwischenfeldteils im Winkel zueinander liegen.

6. Sensorvorrichtung nach Anspruch 1, **dadurch gekennzeichnet, dass** das Codefeld eine gerade Anzahl von untereinander gleich grossen Positionierungsfeldern und eine entsprechende, um Eins kleinere ungerade Anzahl von untereinander gleich grossen Zwischenfeldern umfasst, und dass die Zwischenfelder untereinander gleich oder spiegelgleich sind.

7. Sensorvorrichtung nach Anspruch 6, **dadurch gekennzeichnet, dass** das Codefeld vier Positionierungsfelder und drei Zwischenfelder umfasst.

8. Sensorvorrichtung nach Anspruch 6, **dadurch gekennzeichnet, dass** der in einem Positionierungsfeld angeordnete Code einer Position dieses Positionierungsfeldes im Codefeld entspricht und eine von der Abtasteinrichtung auswertbare Positionsinformation umfasst, die angibt, an welcher Stelle sich das Positionierungsfeld in einer von den Positionierungsfeldern entlang der Mittellinie gebildeten Reihenfolge befindet.

9. Sensorvorrichtung nach Anspruch 8, **dadurch gekennzeichnet, dass** in den Positionierungsfeldern der Code jeweils eine Strichgruppe aus mindestens zwei rechteckigen Strichen und einem dazwischenliegenden rechteckigen Zwischenraum umfasst, wobei die Striche und Zwischenräume optisch voneinander verschieden sind und eine jeweilige Längsrichtung der Striche und Zwischenräume rechtwinklig zur Mittellinie des Codefelds über dessen ganze Ausdehnung verläuft.

10. Sensorvorrichtung nach Anspruch 9, **dadurch gekennzeichnet, dass** die jeweiligen Positionen einer Mehrzahl von Positionierungsfeldern im Codefeld durch aufeinanderfolgende Zahlenwerte codiert sind.

11. Sensorvorrichtung nach Anspruch 1, **dadurch gekennzeichnet, dass** in der Abtastebene die Winkellage der Blickrichtung um das optische Zentrum auf eine in vorbestimmter Winkellage zur Ebene des Codeträgers liegende Referenzrichtung bezogen ist.

12. Sensorvorrichtung nach Anspruch 1, **dadurch gekennzeichnet, dass** die Ebene des Codeträgers in einer in einem Koordinatensystem vorbestimmten Lage angeordnet ist und in der Abtastebene die Winkellage der Blickrichtung um das optische Zentrum auf eine Referenzrichtung von im Koordinatensystem vorbestimmter Winkellage bezogen ist.

13. Sensorvorrichtung nach Anspruch 11 oder 12, **dadurch gekennzeichnet, dass** die Referenzrichtung orthogonal zur Ebene des Codeträgers liegt und die Objekte in drei zueinander orthogonalen Richtungen, von denen die eine parallel zur Referenzrichtung und die beiden anderen parallel zur Ebene des Codeträgers liegen, relativ zueinander verschiebbar sind.

14. Verwendung der Sensorvorrichtung nach Anspruch 1 in einem in drei zueinander orthogonalen Richtungen bewegbaren Bestückungsroboter für eine Linie von Maschinen und/oder Einrichtungen.

15. Verwendung nach Anspruch 14, bei welcher die Maschinen bzw. Einrichtungen zur automatischen Bearbeitung bzw. Behandlung von elektronischen Bauelementen bestimmt sind.

16. Verfahren zur selbsttätigen Ermittlung einer Position eines verschiebbaren Roboters in bezug auf ein Objekt mit Hilfe einer Steuerung des Roboters und einer Sensorvorrichtung nach Anspruch 1, wobei die Abtasteinrichtung am Roboter und der Codeträger am Objekt angeordnet ist, **dadurch gekennzeichnet, dass** der Roboter von der Steuerung so positioniert wird, dass der Blickwinkel eine Mehrzahl von Positionierungsfeldern umfasst, worauf die Rechenschaltung in einem vorbestimmten Koordinatensystem die Koordinaten des optischen Zentrums in bezug auf einen vorbestimmten Punkt des Codefeldes errechnet und zur Verwendung durch die Steuerung bereitstellt.

17. Verfahren nach Anspruch 16, **dadurch gekennzeichnet, dass** der Roboter von der Steuerung in einer ersten Phase so positioniert wird, dass der Blickwinkel das gesamte Codefeld umfasst, und in einer zweiten Phase näher zum Codeträger so positioniert wird, dass der Blickwinkel nur zwei ausgewählte Positionierungsfelder und das dazwischen liegende Zwischenfeld umfasst, worauf die Rechenschaltung die Koordinaten des optischen Zentrums in bezug auf einen vorbestimmten Punkt des Codefeldes errechnet und zur Verwendung durch die Steuerung bereitstellt.

18. Verfahren nach Anspruch 17, **dadurch gekennzeichnet, dass** die ausgewählten Positionierungsfelder aufgrund eines Vergleichs ihrer Codierung mit einer entsprechenden Vorgabe in der Steuerung des Roboters ausgewählt werden.

19. Anwendung des Verfahrens nach Anspruch 16 zur Steuerung eines in drei zueinander orthogonalen Richtungen bewegbaren Bestückungsroboters für eine Linie von Maschinen und/oder Einrichtungen.

20. Anwendung nach Anspruch 19, bei welcher die Maschinen bzw. Einrichtungen zur automatischen Bearbeitung bzw. Behandlung von elektronischen Bauelementen bestimmt sind.

**Claims**

1. Sensor device for establishing the relative position of two mutually displaceable objects, having

   - an essentially planar code carrier for an optical code, which is arranged on one of the objects in a code field of the code carrier,
   - a scanning device, arranged on the other object, for the optical scanning of a predetermined angle of view which lies in a scanning plane and extends from an optical centre of the scanning device, this optical centre being sent light beams from directions of light incidence within the angle of view, and for the determination of a viewing direction lying in the angle of view by

     - means for detecting an illumination density at at least one photodetector of the scanning device during the course of the scanning of the angle of view according to the direction of light incidence,

     - means for determination of a variation of the illumination density in dependence on the direction of light incidence, and
     - means for determining a viewing direction coinciding with the direction of light incidence if the variation of the illumination density in dependence on the direction of light incidence corresponds to a brightness contrast which exceeds a predetermined brightness contrast, and having

   - a computing circuit,
   - it being possible for the code field to be brought into the angle of view of the scanning device by displacement of the objects with respect to each other and
   - the code is designed to produce upon its scanning by the scanning device in the latter at least one variation of the illumination density leading to the determination of a viewing direction,

     characterized in that

   - the code field is designed to be essentially rectangular with a centre line lying essentially parallel to the scanning plane and comprises at least two rectangular positioning fields and a rectangular interfield lying in between, the code field being filled exactly by an alternating sequence of positioning fields and interfields along the centre line, and
   - the code in at least one interfield comprises at least one boundary line, obliquely intersecting the centre line, between two surface areas of the interfield, which surface areas are designed to produce upon scanning of their common boundary line by the scanning device in the latter a variation of the illumination density leading to the determination of a viewing direction.

2. Sensor device according to Claim 1, characterized in that the interfield is essentially bisected essentially diagonally into two optically different interfield regions in such a way that the interfield regions represent a design of the surface regions in which the boundary line crosses through the interfield essentially diagonally.

3. Sensor device according to Claim 1, characterized in that the interfield is essentially bisected along the mid-vertical of the centre line into two interfield parts and the interfield parts are for their part essentially bisected essentially diagonally into two optically different interfield regions in such a way that in each interfield part the interfield regions represent a design of the surface areas in which the boundary line crosses through the interfield part essentially diagonally, the boundary lines of one interfield part and of the other interfield part lying at an angle to each other.

4. Sensor device according to Claim 1, characterized in that a diagonal line crosses through the interfield essentially diagonally and bisects it approximately into two interfield regions of an optically identical nature, the diagonal line being optically different from the interfield regions.

5. Sensor device according to Claim 1, characterized in that the interfield is essentially bisected along the mid-vertical of the centre line into two interfield parts and in each interfield part a diagonal line crosses through the interfield part essentially diagonally and approximately bisects it into in each case two interfield regions of an optically identical nature, the diagonal line being optically different from the interfield regions, the boundary lines of one interfield part and of the other interfield part lying at an angle to each other.

6. Sensor device according to Claim 1, characterized in that the code field comprises an even number of positioning fields of the same size as one another and a corresponding odd number, one less, of interfields of the same size as one another, and in that the interfields are identical or mirror-identical to one another.

7. Sensor device according to Claim 6, characterized in that the code field comprises four positioning fields and three interfields.

8. Sensor device according to Claim 6, characterized in that the code arranged in a positioning field corresponds to a position of this positioning field in the code field and comprises positional information which can be evaluated by the scanning device and specifies at which point the positioning field is located in a sequence formed by the positioning fields along the centre line.

9. Sensor device according to Claim 8, characterized in that in the positioning fields the code respectively comprises a group of lines of at least two rectangular lines and a rectangular interspace lying in between, the lines and interspaces being optically different from one another and a respective longitudinal direction of the lines and interspaces running at right angles to the centre line of the code field over its entire extent.

10. Sensor device according to Claim 9, characterized in that the respective positions of a plurality of positioning fields in the code field are coded by consecutive numerical values.

11. Sensor device according to Claim 1, characterized in that in the scanning plane the angular position of the viewing direction about the optical centre is related to a reference direction lying at a predetermined angular position to the plane of the code carrier.

12. Sensor device according to Claim 1, characterized in that the plane of the code carrier is arranged in a position predetermined in the system of coordinates and in the scanning plane the angular position of the viewing direction about the optical centre is related to a reference direction having an angular position predetermined in the system of coordinates.

13. Sensor device according to Claim 11 or 12, characterized in that the reference direction lies orthogonally to the plane of the code carrier and the objects are displaceable in relation to each other in three mutually orthogonal directions, of which one lies parallel to the reference direction and the two others lie parallel to the plane of the code carrier.

14. Use of the sensor device according to Claim 1 in a mounting robot which can be moved in three mutually orthogonal directions for a line of machines and/ or devices.

15. Use according to Claim 14, in which the machines or devices are intended for the automatic processing or treatment of electronic elements.

16. Method of automatically determining a position of a displaceable robot with respect to an object with the aid of a control of the robot and a sensor device according to Claim 1, the scanning device being arranged on the robot and the code carrier being arranged on the object, characterized in that the robot is positioned by the control in such a way that the angle of view covers a plurality of positioning fields, whereupon the computing circuit calculates in a predetermined system of coordinates the coordinates of the optical centre with respect to a predetermined point of the code field and prepares it for use by the control.

17. Method according to Claim 16, characterized in that, in a first phase, the robot is positioned by the control in such a way that the angle of view covers the entire code field, and, in a second phase, is positioned closer to the code carrier in such a way that the angle of view covers only two selected positioning fields and the interfield lying in between, whereupon the computing circuit calculates the coordinates of the optical centre with respect to a predetermined point of the code field and prepares it for use by the control.

**18.** Method according to Claim 17, characterized in that the selected positioning fields are selected on the basis of a comparison of their coding with a corresponding default value in the control of the robot.

**19.** Application of the method according to Claim 16 for controlling a mounting robot which can be moved in three mutually orthogonal directions for a line of machines and/or devices.

**20.** Application according to Claim 19, in which the machines or devices are intended for the automatic processing or treatment of electronic elements.

## Revendications

**1.** Palpeur pour l'établissement de la position relative de deux objets aptes à coulisser l'un par rapport à l'autre, comprenant

- un support de code essentiellement plane pour un code optique qui est disposé sur un des objets dans un champ de code du support de code,
- un mécanisme de balayage disposé sur l'autre objet pour le balayage optique d'un angle de visée prédéterminé qui se situe dans un plan de balayage et qui part d'un centre optique du mécanisme de balayage, dans lequel on achemine à ce centre optique, des rayons lumineux à partir de directions d'incidence de la lumière situées à l'intérieur de l'angle de visée, et pour la détermination d'une direction de visée se trouvant dans l'angle de visée,

  - des moyens pour enregistrer une densité d'éclairement sur au moins un photodétecteur du mécanisme de balayage au cours du balayage de l'angle de visée dans la direction d'incidence de la lumière,
  - des moyens pour la détermination d'une variation de la densité d'éclairement en fonction de la direction d'incidence de la lumière, et
  - des moyens pour la détermination d'une direction de visée coïncidant avec la direction d'incidence de la lumière, lorsque la variation de la densité d'éclairement en fonction de la direction d'incidence de la lumière correspond à un contraste de brillance qui dépasse un contraste de brillance prédéfini, étant prévus, et comprenant

  - un circuit de calcul,
  - dans lequel le champ de code peut être amené dans l'angle de visée du mécanisme de balayage par coulissement des objets l'un vers l'autre, et

- le code est réalisé pour former, lors de son balayage par le mécanisme de balayage, dans ce dernier, au moins une variation de la densité d'éclairement conduisant à une détermination d'une direction de visée,

  caractérisé en ce que

- le champ de code est réalisé essentiellement en forme rectangulaire, une ligne médiane étant essentiellement parallèle au plan de balayage, et englobe au moins deux champs de positionnement rectangulaires et un champ intermédiaire rectangulaire disposé entre eux, le champ de code étant exactement rempli par une suite alternante de champs de positionnement et de champs intermédiaires le long de la ligne médiane, et
- le code, dans au moins un champ intermédiaire, englobe, entre deux zones superficielles du champ intermédiaire, au moins une ligne de séparation coupant en oblique la ligne médiane, lesdites zones superficielles étant réalisées pour former, lors du balayage de leur ligne de séparation commune par le mécanisme de balayage, dans ce dernier, une variation de la densité d'éclairement conduisant à la détermination d'une direction de visée.

**2.** Palpeur selon la revendication 1, caractérisé en ce que le champ intermédiaire est essentiellement partagé, essentiellement en direction diagonale, en deux zones de champ intermédiaire différentes du point de vue optique de telle sorte que les zones de champ intermédiaire représentent une configuration des zones superficielles telle que la ligne de séparation traverse le champ intermédiaire essentiellement en diagonale.

**3.** Palpeur selon la revendication 1, caractérisé en ce que le champ intermédiaire est essentiellement divisé le long de la médiatrice de la ligne médiane en deux parties de champ intermédiaire et les parties de champ intermédiaire à leur tour sont essentiellement divisées, essentiellement en direction diagonale, en deux zones de champ intermédiaire différentes du point de vue optique de telle sorte que, dans chaque partie de champ intermédiaire, les zones de champ intermédiaire représentent une configuration des zones superficielles telle que la ligne de séparation traverse la partie de champ intermédiaire essentiellement en diagonale, les lignes de séparation de l'une et de l'autre partie de champ intermédiaire formant des angles opposés.

**4.** Palpeur selon la revendication 1, caractérisé en ce qu'un trait diagonal traverse le champ intermédiaire essentiellement en diagonale et divise approximativement en deux zones de champ intermédiaire de nature identique du point de vue optique, le trait diagonal étant différent des zones de champ intermédiaire du point de vue optique.

5. Palpeur selon la revendication 1, caractérisé en ce que le champ intermédiaire est essentiellement divisé le long de la médiatrice de la ligne médiane en deux parties de champ intermédiaire et dans chaque partie de champ intermédiaire, un trait diagonal traverse la partie de champ intermédiaire essentiellement en diagonale et la divise approximativement en respectivement deux zones de champ intermédiaire de nature identique du point de vue optique, le trait diagonal étant différent des zones de champ intermédiaire du point de vue optique, les traits diagonaux de l'une et de l'autre partie de champ intermédiaire formant des angles opposés.

6. Palpeur selon la revendication 1, caractérisé en ce que le champ de code comprend un nombre pair de champs de positionnement de grandeur mutuellement égale et un nombre impair correspondant diminué de 1 de champs intermédiaires de grandeur mutuellement égale, et en ce que les champs intermédiaires sont mutuellement égaux ou symétriques.

7. Palpeur selon la revendication 6, caractérisé en ce que le champ de code comprend quatre champs de positionnement et trois champs intermédiaires.

8. Palpeur selon la revendication 6, caractérisé en ce que le code disposé dans un champ de positionnement correspond à une position de ce champ de positionnement dans le champ de code et englobe une information de position qui peut être évaluée par le mécanisme de balayage, qui indique à quel endroit se trouve le champ de positionnement dans une succession formée par les champs de positionnement le long de la ligne médiane.

9. Palpeur selon la revendication 8, caractérisé en ce que, dans les champs de positionnement, le code comprend respectivement un groupe de traits constitué par au moins deux traits rectangulaires et par un espace intermédiaire rectangulaire disposé entre eux, les traits et les espaces intermédiaires étant différents l'un de l'autre du point de vue optique et une direction longitudinale respective des traits et des espaces intermédiaires s'étendant perpendiculairement à la ligne médiane du champ de code sur toute son étendue.

10. Palpeur selon la revendication 9, caractérisé en ce que les positions respectives d'une multitude de champs de positionnement dans le champ de code sont codées par des valeurs numériques successives.

11. Palpeur selon la revendication 1, caractérisé en ce que, dans le plan de balayage, la position angulaire de la direction de visée autour du centre optique se rapporte à une direction de référence disposée dans une position angulaire prédéterminée par rapport au plan du support de code.

12. Palpeur selon la revendication 1, caractérisé en ce que le plan du support de code est situé dans une position prédéterminée dans un système de coordonnées et, dans le plan de balayage, la position angulaire de la direction de visée autour du centre optique se rapporte à une direction de référence de la position angulaire prédéterminée dans le système de coordonnées.

13. Palpeur selon la revendication 11 ou 12, caractérisé en ce que la direction de référence se trouve en position orthogonale par rapport au plan du support de code et les objets sont aptes à coulisser l'un par rapport à l'autre dans trois directions mutuellement orthogonales, dont l'une est située parallèlement à la direction de référence et dont les deux autres sont situées parallèlement au plan du support de code.

14. Utilisation du palpeur selon la revendication 1, dans laquelle un robot destiné au montage des composants est mobile dans trois directions mutuellement orthogonales, pour une ligne de machines et/ou de mécanismes.

15. Utilisation selon la revendication 14, dans laquelle les machines, respectivement les mécanismes sont destinés au traitement, respectivement à la manipulation automatiques de composants électroniques.

16. Procédé pour la détermination automatique d'une position d'un robot apte à coulisser, par rapport à un objet, à l'aide d'une commande du robot et d'un palpeur selon la revendication 1, dans lequel le mécanisme de balayage est disposé sur le robot et le support de code est disposé sur l'objet, caractérisé en ce que le robot est positionné par la commande de telle sorte que l'angle de visée comprend une multitude de champs de positionnement; à partir de là, le circuit de calcul calcule, dans un système de coordonnées prédéterminé, les coordonnées du centre optique par rapport à un point prédéterminé du champ de code et les rend disponibles pour être utilisées par la commande.

17. Procédé selon la revendication 16, caractérisé en ce que le robot est positionné par la commande dans une première phase de telle sorte que l'angle de visée englobe le champ de code total et est positionné dans une deuxième phase plus près du support de code de telle sorte que l'angle de visée ne comprend que deux champs de positionnement sélectionnés et le champ intermédiaire situé entre eux; à partir de là, le circuit de calcul calcule les coordonnées du centre optique par rapport à un point prédéterminé du champ de code et les rend disponibles pour être utilisées par la commande.

18. Procédé selon la revendication 17, caractérisé en ce que les champs de positionnement sélectionnés le sont sur base d'une comparaison de leur codage avec une valeur par défaut correspondante dans la commande du robot.

19. Utilisation du procédé selon la revendication 16, pour la commande d'un robot destiné au montage de composants, mobile dans trois directions mutuellement orthogonales, pour une ligne de machines et/ou de mécanismes.

20. Utilisation selon la revendication 19, dans laquelle les machines, respectivement les mécanismes sont destinés au traitement, respectivement à la manipulation automatiques de composants électroniques.

Fig. 1

Fig. 2

Fig. 3

Fig. 4

Fig.5a

Fig.5b

Fig.6a

Fig.6b